**Europäisches Patentamt**

**European Patent Office**

**Office européen des brevets**

(19)

(11) Veröffentlichungsnummer: **0 140 258**
**B1**

(12) **EUROPÄISCHE PATENTSCHRIFT**

(45) Veröffentlichungstag der Patentschrift:
**11.05.88**

(51) Int. Cl.⁴: **G 01 S 15/89**

(21) Anmeldenummer: **84112340.9**

(22) Anmeldetag: **13.10.84**

(54) **Verfahren zur akustischen Vermessung des Oberflächenprofils eines Gewässergrundes.**

(30) Priorität: **20.10.83 DE 3338050**

(43) Veröffentlichungstag der Anmeldung:
**08.05.85 Patentblatt 85/19**

(45) Bekanntmachung des Hinweises auf die Patenterteilung:
**11.05.88 Patentblatt 88/19**

(84) Benannte Vertragsstaaten:
**AT BE CH DE FR GB IT LI NL SE**

(56) Entgegenhaltungen:
**DE - A - 2 045 276**
**DE - A - 3 020 508**
**US - A - 3 144 631**
**US - A - 3 296 579**

(73) Patentinhaber: **Fried. Krupp Gesellschaft mit beschränkter Haftung, Altendorfer Strasse 103, D-4300 Essen 1 (DE)**

(72) Erfinder: **Ziese, Rolf, Fohlenweide 12, D-2800 Bremen (DE)**

## Beschreibung

Die Erfindung betrifft ein Verfahren zur akustischen Vermessung des Oberflächenprofils eines Gewässergrundes, insbesondere des Meeresbodens, der im Oberbegriff des Anspruchs 1 angegebenen Art.

Die nach diesem Verfahren gewonnenen Messprofile der einzelnen Senderzielstreifen ergeben in Fahrtrichtung des Vermessungsschiffes aneinandergereiht nur dann ein den tatsächlichen Verhältnissen entsprechendes Oberflächenprofil des abgetasteten Gewässergrundes, wenn die Schallgeschwindigkeit über dem gesamten Lotbereich als im wesentlichen konstant angesehen werden kann. Dieses kann i.a. jedoch nicht vorausgesetzt werden. Vielmehr ist für das Meerwasser charakteristisch die Ausbildung von dünnen Dichte-Sprungschichten, die Wasserschichten unterschiedlicher Dichte oder Schallgeschwindigkeit voneinander trennen. Die Schichten unterschiedlicher Schallgeschwindigkeit erfahren eine laufende Veränderung, die durch klimatische oder ozeanische Phänomene, wie z.B. Erwärmung oder Abkühlung im Jahres- oder Tagesverlauf, Durchmischung durch Seegang, Ausbildung interner Wellen im Zeitbereich von Minuten bis Stunden, Zusammentreffen von Wassermassen verschiedener Herkunft, verursacht wird. Die Folge davon sind verzerrte Oberflächenprofile.

Bei einem bekannten Verfahren der eingangs genannten Art (US-PS 3 296 579) werden zur Kompensation der Profilverzerrungen einem Computer zur Berechnung der Messprofile aus Echolaufzeit und Empfangsrichtung sog. Bathythermogramm-Daten eingegeben. Unter Berücksichtigung dieser Daten berechnet der Computer die entsprechenden räumlichen horizontalen und vertikalen Koordinaten des tatsächlichen Echoursprungsortes. Die Bathythermogramm-Daten werden von Bathythermogramm-Aufzeichnungen abgenommen. Da sich die Wasserschichtung innerhalb eines zu vermessenden Seegebietes sowohl mit der zurückgelegten Entfernung des Vermessungsschiffes als auch minütlich oder stündlich infolge vorgenannter Phänomene ändern kann, ist es bei exakten Vermessungsaufgaben erforderlich, laufend bzw. in sehr kurzen zeitlichen Abständen solche Bathythermogramme am jeweiligen Vermessungsort zu erstellen. Die Aufnahme eines Bathythermogramms ist jedoch eine aufwendige und zeitraubende Prozedur, welche die Arbeitsgeschwindigkeit des Vermessungsschiffes in kaum akzeptierbarem Masse herabsetzt. Deshalb begnügt man sich meistens damit, in räumlich und zeitlich grossen Abständen solche Bathythermogramme zu erstellen, was dann allerdings zu Lasten der Genauigkeit des gemessenen Oberflächenprofils geht.

Der Erfindung liegt die Aufgabe zugrunde, ein Verfahren zur akustischen Vermessung des Oberflächenprofils eines Gewässergrundes der eingangs genannten Art anzugeben, das exakte und richtige Werte vom Oberflächenprofil des abgetasteten Gewässergrundes bei hoher Vorschub- oder Arbeitsgeschwindigkeit des Vermessungsschiffes liefert.

Die Aufgabe ist bei einem Verfahren zur akustischen Vermessung des Oberflächenprofils eines Gewässergrundes der im Oberbegriff des Anspruchs 1 angegebenen Gattung durch die Merkmale im Kennzeichnungsteil des Anspruchs 1 gelöst.

Mit dem erfindungsgemässen Verfahren kann ohne Unterbrechung des Vermessungsvorgangs laufend und sehr schnell eine Korrekturgrösse ermittelt werden, welche die am momentanen Messort herrschenden tatsächlichen Schallgeschwindigkeitsverhältnisse exakt berücksichtigt. Ein kurzzeitiger, nur wenige Sekunden dauernder Schwenk von Sendebeam und Empfangsbeamfächer um 90° um die Schiffshochachse während der laufenden Abtastung des Gewässergrundes genügt, um ein Testprofil aufzunehmen. Da vorausgehend oder nachfolgend der gleiche räumliche Streifen des Gewässergrundes, von dem das Testprofil erstellt worden ist, mit einem lotrecht ausgerichteten Empfangsbeam, dessen Verlauf unbeeinflusst von Schallgeschwindigkeitsänderungen ist, sukzessive bei Vorschub des Vermessungsschiffes abgetastet worden ist oder wird, erhält man von diesem in Fahrtrichtung lotrecht unter dem Schiff sich erstreckenden Gewässergrundstreifen ein den wahren Verhältnissen entsprechendes Eichprofil. Aus Abweichungen zwischen Eichprofil und Testprofil lässt sich dann die Korrekturgrösse ermitteln, die in die Kompensationsrechnung zur Eliminierung von Verzerrungen der Messprofile einzugehen hat. Die Erstellung von Bathythermogrammen während der Vermessungsfahrt ist damit überflüssig.

Eine vorteilhafte Ausführungsform der Erfindung ergibt sich aus Anspruch 2, insbesondere in Verbindung mit Anspruch 3. Eine solche Berechnung und Korrektur eines dem Testprofil zugehörigen Schallstrahlverlaufs mittels eines geschätzten Velozigramms kann mittels eines Feldrechners sehr schnell durchgeführt werden. Wenn man dabei von bekannten Velozigrammen des zu vermessenden Seegebietes als Start-Schätzvelozigramm ausgeht oder vor Aufnahme der Vermessungsfahrt an einem beliebigen Ort des Seegebietes ein Bathythermogramm in bekannter Weise erstellt und daraus das erste Schätzvelozigramm ableitet, so wird die Anzahl der notwendigen Variationen des Schätzvelozigramms und der durchzuführenden Korrekturen des Schallstrahlverlaufs relativ klein sein und nur geringe Rechenzeit erfordern.

Ein vorteilhaftes Verfahren zur exakten akustischen Vermessung des Oberflächenprofils, das insbesondere in Kombination mit den vorgenannten Anspruchsmerkmalen eine optimale Lösung des in Rede stehenden Problems ergibt, ist in Anspruch 4 angegeben. Durch die dort genannten Merkmale ist es möglich, die gemessenen Tiefenwerte den genauen Echoursprungsorten zuzuordnen und somit fehlerhafte Positionsbestimmungen des Vermessungsschiffes zu kompensieren. Solche Fehler ergeben sich z.B. bei der üblicherweise durchgeführten Koppelrechnung aufgrund von Kurs und Geschwindigkeit des Schiffes von einer bekannten Ausgangsposition aus. Damit ist es nicht nur möglich, bei grosser Vermessungsgeschwindigkeit die Tiefenwerte exakt zu bestimmen, sondern auch deren Lage in der horizontalen Ebene genau zu fixieren, ohne dass fortlaufend zeitraubende Standortbestimmungen mit Hilfe feststehender Referenzorte durchgeführt werden müssen. Damit kann das erfindungsgemässe Verfahren auch in solchen Seegebieten eingesetzt werden, wo solche Referenzorte nicht oder nur begrenzt zur Verfügung stehen.

Die Erfindung ist anhand eines mittels der Zeichnung illustrierten Ausführungsbeispiels eines Verfahrens zur akustischen Vermessung des Oberflächenprofils des Meeresbodens im folgenden näher erläutert. Dabei zeigen jeweils in schematischer Darstellung

Fig. 1 eine perspektivische Ansicht eines von einem Fächer-Echolot eines Vermessungsschiffes erzeugten Senderzielstreifens und Fächers von Empfängerstreifen in Grund- oder Messstellung,

Fig. 2 eine gleiche Ansicht wie in Fig. 1 jedoch mit Senderzielstreifen und Fächer von Empfängerzielstreifen in Schwenk- oder Eichstellung,

Fig. 3 eine Draufsicht auf ein Schema zur Messprofil- und Testprofilgewinnung zu verschiedenen Zeitpunkten der Fahrt des Vermessungsschiffes,

Fig. 4 eine Graphik von Testprofil mit ideellem Schallstrahlverlauf und Eichprofil und eines Schätzvelozigramms,

Fig. 5 eine Graphik zur Veranschaulichung einer Korrekturrechnung zur Entzerrung eines Messprofils,

Fig. 6 eine Draufsicht einer vom Vermessungsschiff erstellten Vermessungsspur mit beiderseits des Fahrwegs sich erstreckenden Messprofilen,

Fig. 7 eine Seitenansicht zweier sich überlappender Messprofile der Vermessungsspur in Fig. 6.

Bei dem Verfahren zur akustischen Vermessung des Oberflächenprofils des Meeresbodens eines Seegebietes wird ein an sich bekanntes Echolot mit einer Sende- und Empfangsvorrichtung verwendet, das am Boden eines Wasserfahrzeugs, hier eines Oberflächenschiffes 110, installiert ist. Anordnung und Ausbildung der Sende- und Empfangsvorrichtung des Echolots, auf dessen Darstellung hier verzichtet worden ist, kann so getroffen sein, wie dies in der US-PS 3 144 631 beschrieben ist.

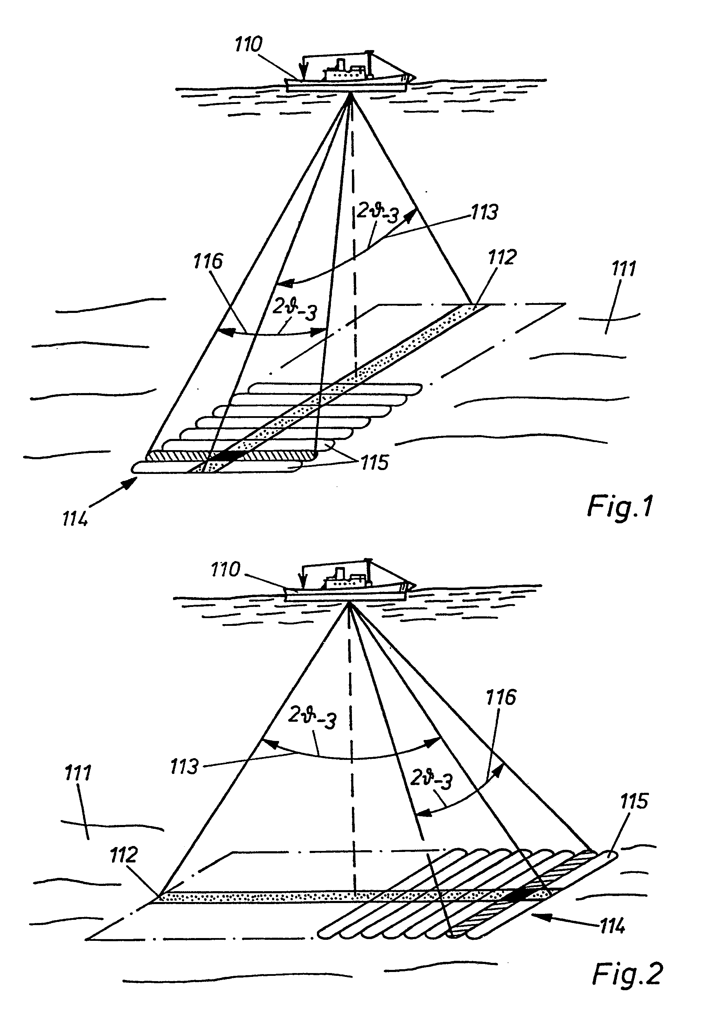

Mit der Sendevorrichtung wird ein im wesentlichen lotrecht unter dem Schiff quer zu dessen Fahrtrichtung liegender Sendezielstreifen 112 auf dem Meeresboden 111 mit Schallimpulsen beschallt. Durch eine entsprechende Ausbildung der Sendeantenne, z.B. als Linienarray, und/oder durch elektronische Richtungsbildung sind die vom Sender ausgehenden Schallstrahlen so gebündelt, dass sie einen Öffnungswinkel $2 \vartheta_{-3}$ in Fahrtrichtung von ungefähr 1° und quer zur Fahrtrichtung von ungefähr 60° bis 90° aufweisen. Ein solcher Sendeschallstrahl oder Sendebeam ist in Fig. 1 schematisch dargestellt und mit 113 bezeichnet.

Die im Sendezielstreifen 112 durch Reflexion am Meeresboden 111 entstehenden Echos werden mittels der Empfangsvorrichtung richtungsselektiv empfangen. Durch entsprechende elektronische Verarbeitung der einzelnen Empfangssignale wird erreicht, dass die Empfangsvorrichtung einen Fächer 114 von in Fahrtrichtung sich erstreckenden, quer zur Fahrtrichtung aneinandergereihten schmalen Empfangsbeams 116 oder Empfangssektoren aufweist, die am Meeresboden 111 Empfängerstreifen 115 begrenzen, wie sie in Fig. 1 und 2 skizziert sind. Der Öffnungswinkel $2 \vartheta_{-3}$ der Empfangsbeams 116 beträgt in Fahrtrichtung etwa 15° und quer dazu ungefähr 1°. Die Empfangsvorrichtung ist relativ zu der Sendevorrichtung so angeordnet, dass der Senderzielstreifen 112 von dem Fächer 114 der Empfängerstreifen 115 überdeckt wird. Zur Berücksichtigung von Rollbewegungen des Schiffes 110 wird bei einem Öffnungswinkel $2 \vartheta_{-3}$ des Sendebeams von 90° quer zur Fahrtrichtung nur ein Winkel von ungefähr 60° quer zur Fahrtrichtung von dem Fächer 114 überdeckt, so dass bei einer Breite der Empfängerstreifen 115 von ungefähr 1° sechzig Empfängerstreifen 115 im Fächer 114 vorhanden sind.

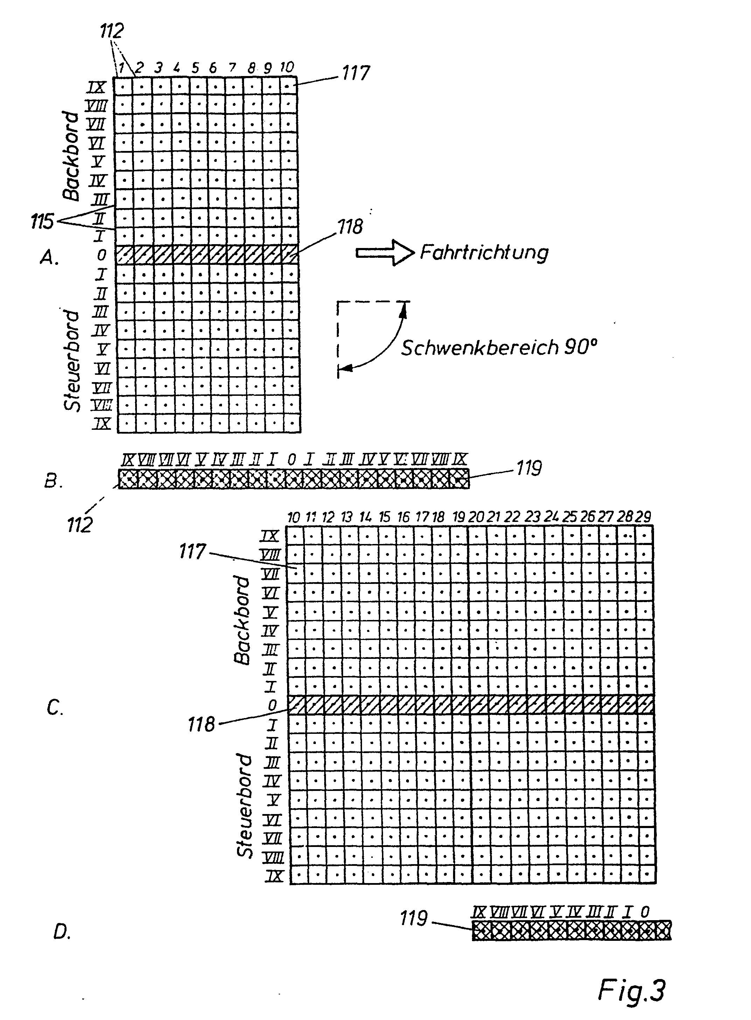

Zur Gewinnung des Oberflächenprofils des Meeresbodens 111 werden nunmehr in bekannter Weise Schallimpulse ausgesendet und die im Senderzielstreifen 112 am Meeresboden 111 entstehenden Echos getrennt aus den einzelnen Empfängerstreifen 115 empfangen und die Laufzeit der Echos gemessen. Aus den Laufzeiten und der Lage der Empfängerstreifen 115 werden nunmehr nach bekannten einfachen geometrischen Berechnungen die Tiefenwerte bestimmt, die in Zuordnung zu dem jeweiligen Ursprungsort der Echos ein Messprofil 117 (Fig. 3) des Meeresbodens 111 in dem Bereich des Senderzielstreifens 112 ergeben. Die in Vorschub- oder Fahrtrichtung des Schiffes 110 erhaltene Vielzahl von einzelnen Messprofilen 117 bilden räumlich aneinandergereiht das Oberflächenprofil des Meeresbodens 111 im Vermessungsgebiet längs einer sog. Vermessungsspur.

Dieses Oberflächenprofil bzw. die Vielzahl der Messprofile 117 entspricht nur dann der Realität, wenn die Schallgeschwindigkeit im Wasser im gesamten Vermessungsgebiet konstant ist. Kann dies – wie in den meisten Fällen – nicht vorausgesetzt werden, so sind die Tiefenwerte bzw. die Messprofile mittels des tatsächlichen Schallstrahlverlaufs im Vermessungsgebiet oder in Bereichen des Vermessungsgebietes zu korrigieren. Die hierzu benötigte Korrekturgrösse wird nach dem hier angewendeten Verfahren wie folgt gewonnen, was am einfachsten anhand der Fig. 3 nachstehend erläutert wird:

Zur Vereinfachung der Darstellung ist eine Empfangsvorrichtung mit neunzehn Empfangsbeams 116 angenommen, die auf dem Meeresboden 111 neunzehn Empfängerstreifen 115 mit der Bezeichnung 0 unter Schiffsmitte, I bis IX Backbord und Steuerbord bilden. Der mittlere Empfangsstreifen mit der Bezeichnung 0 liegt im wesentlichen lotrecht unter Längsschiff. Von der Sendevorrichtung wird bei Vorschub des Schiffes nacheinander eine Vielzahl von Senderzielstreifen 112 «beleuchtet», die in Fig. 3 mit den Ziffern 1 bis 29 fortlaufend numeriert sind. In jedem durch die Empfängerstreifen 115 und die momentane Lage des Senderzielstreifens 112 bestimmten Quadrat wird ein Tiefenwert erhalten, der in Fig. 3 durch einen Punkt symbolisiert ist. Die Tiefenwerte eines Senderzielstreifens 112 ergeben aneinandergereiht das Messprofil 117 des Meeresbodens 111 quer zur Fahrtrichtung. Die Tiefenwerte in den schraffierten Quadraten stellen dabei aneinandergereiht ein Längsprofil lotrecht unterhalb des vom Schiff zurückgelegten Fahrweges dar. Da Lotstrahlen bei Durchdringen von Wasserschichten mit unterschiedlichen Schallgeschwindigkeitsgradienten nicht gebeugt werden, entspricht dieses Längsprofil den tatsächlichen Verhältnissen am Meeresboden 111. Dieses Längsprofil mit den wahren Tiefenwerten bildet ein sog. Eichprofil 118.

Hat das Schiff 110 eine Wegstrecke zurückgelegt, die mindestens gleich der Erstreckung des Fächers 114 quer zur Fahrtrichtung ist, so werden der Sendebeam 113 und der Fächer 114 von Empfangsbeams 116 gemeinsam aus ihrer in Fig. 1 dargestellten Grund- oder Messstellung um 90° um die Schiffshochachse in ihre in Fig. 2 dargestellte Schwenk- oder Eichstellung geschwenkt. Die Schwenkung kann z.B. durch gemeinsame mechanische Drehung der Sende- und Empfangsvorrichtung oder – bei gleicher geometrischer Ausbildung der Sende- und Empfangsantenne oder -basis – durch Umschalten einer zwischen Antennen und Vorrichtungen angeordneten Relaismatrix erfolgen, welche die einzelnen Antennenwandler von der jeweils zugeordneten Vorrichtung trennt und an die jeweils andere Vorrichtung anschliesst. Der Senderzielstreifen 112 und die Empfängerstreifen 115 nehmen nunmehr eine Lage ein, wie sie in Fig. 2 schematisch skizziert ist. Der Senderzielstreifen 112 liegt nunmehr lotrecht unter Längsschiff und die quer zur Fahrtrichtung des Schiffes ausgerichteten Empfängerstreifen 115 sind in Fahrtrichtung nebeneinander aufgereiht. Der Senderzielstreifen 112 überdeckt in der Schwenk- oder Eichstellung des Echolots exakt denjenigen Teil des Vermessungsgebietes, von dem zuvor das Eichprofil 118 erstellt worden ist und von dem anschliessend mit zurückgeschwenktem Echolot wiederum in Schiffsvorausrichtung ein Eichprofil erstellt werden wird.

Die in dem geschwenkten Senderzielstreifen 112 entstehenden Echos werden wiederum aus den neunzehn Empfängerstreifen 115 getrennt empfangen. Die Laufzeiten der Echos werden gemessen und daraus unter Berücksichtigung der Empfangsrichtung in gleicher Weise die zugehörigen Tiefenwerte ermittelt. In Zuordnung zu dem Ursprungsort der Echos ergeben diese Tiefenwerte ein sog. Testprofil 119 lotrecht unter Längsschiff. Ein solches in Schwenk- oder Eichstellung des Echolots aufgenommenes Testprofil 119 ist in Fig. 3B durch Doppelschraffur symbolisiert. Nach Aufnahme des Testprofils 119, was nur wenige Sekunden beansprucht, wird das Echolot wieder in seine Grund- oder Messstellung zurückgeschwenkt und weitere Messprofile 117 bei Vorwärtsfahrt des Schiffes erstellt. Diese Messprofile sind in Fig. 3C wiederum symbolisch dargestellt und mit den Zahlen 10 bis 29 gekennzeichnet. Hat das Schiff mindestens eine Fahrstrecke zurückgelegt, die der Breite des Fächers 114 quer zur Fahrtrichtung entspricht, so wird das Echolot erneut in die Schwenk- oder Eichstellung umgeschwenkt und ein neues Testprofil in der beschriebenen Art und Weise erstellt. Dieser Vorgang ist in Fig. 3D schematisch angedeutet. Der Vorgang wiederholt sich laufend über die gesamte Fahrstrecke des Schiffes.

Eichprofil 118 und Testprofil 119 werden nunmehr miteinander verglichen. Wenn die Schallgeschwindigkeit im Wasser zwischen Schiff 110 und Meeresboden 111 konstant ist, stimmen diese beiden Profile überein. Wenn nicht, stimmt lediglich der Tiefenwert aus dem mittleren Empfängerstreifen 0 des Testprofils 119 mit dem wahren Tiefenwert des Eichprofils 118 überein. Die anderen Messwerte des Testprofils 119 weichen mehr oder weniger von dem Eichprofil 118 ab. Aus der Abweichung zwischen Testprofil 119 und Eichprofil 118 lässt sich nunmehr eine Korrekturgrösse gewinnen, mittels welcher die tatsächlichen Schallgeschwindigkeitsverhältnisse im Wassergebiet zwischen Schiff 110 und Meeresboden 111 bestimmt werden können. Mit Hilfe dieser Korrekturgrösse lassen sich in bekannter Weise die in der Grund- oder Messstellung des Echolots aufgenommenen Messprofile 117 rechnerisch korrigieren, so dass nunmehr ein exaktes Oberflächenprofil des Meeresbodens 111 im Vermessungsgebiet erhalten wird.

Als Korrekturgrösse wird hier aus den Abweichungen von Test- und Eichprofil 119 bzw. 118 ein Velozigramm ermittelt, das den tatsächlichen Verlauf des Schallgeschwindigkeitsgradienten über der Wassertiefe angibt. Hierzu wird zunächst anhand der Abweichungen zwischen Test- und Eichprofil ein sog. Schätzvelozigramm vorgegeben, bei welchem die Schallgeschwindigkeit als Funktion der Wassertiefe einigermassen realistisch angenommen wird. Mit diesem Schätzvelozigramm wird nunmehr für jede Empfangsrichtung $\alpha_{0x}$ der Schallstrahlverlauf berechnet und anhand der gemessenen Echolaufzeiten, aus denen ja das Testprofil 119 hervorgegangen ist, ein Korrektur-Testprofil berechnet. Weicht dieses wiederum von dem Eichprofil 118 ab, so wird das Schätzvelozigramm variiert. Mit dem variierten Schätzvelozigramm wird erneut der Schallstrahlverlauf für jede einzelne Empfangsrichtung $\alpha_{0x}$ berechnet und mittels der aus dem Testprofil 119 bekannten Echolaufzeiten ein weiteres Korrektur-Testprofil berechnet. Dieser Vorgang wird so lange wiederholt, bis das berechnete Korrektur-Testprofil mit dem Eichprofil 118 übereinstimmt. Das zuletzt geänderte Schätzvelozigramm bildet dann die Korrekturgrösse, mit der die Messwerte der Messprofile 117 nach einfachen geometrischen Beziehungen umzurechnen sind.

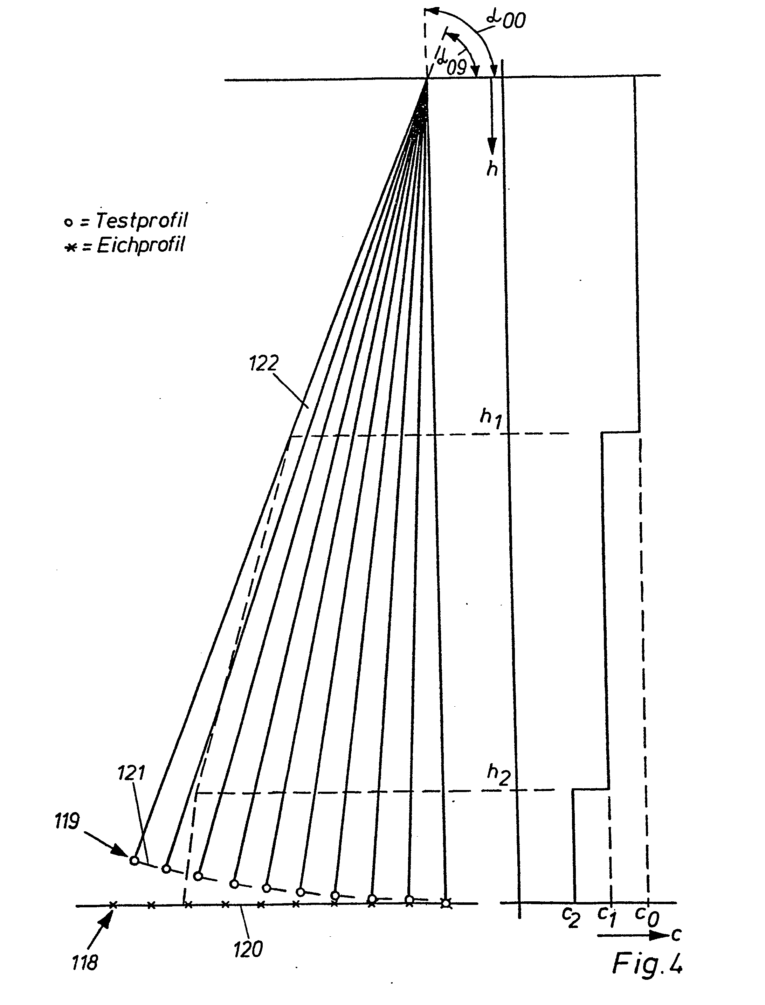

In Fig. 4 ist die Verfahrensweise zur Gewinnung der Korrekturgrösse vereinfacht illustriert. Dabei ist angenommen, dass das während der Messfahrt gewonnene Eichprofil 118 des lotrecht unter Fahrtrichtung liegenden Meeresbodenstreifens eine Gerade 120 ergibt, die durch zehn Messwerte festgelegt ist. Das in Schwenk- oder Eichstellung aufgenommene Testprofil 119 ist wiederum durch zehn Messwerte vorgegeben und wird durch eine mit zunehmendem Empfangswinkel $\alpha_{0x}$ aufwärts gekrümmte Linie 121 repräsentiert. Dieses Testprofil 119 wurde, wie beschrieben, aus den gemessenen Echolaufzeiten unter den jeweiligen Empfangsrichtungen $\alpha_{0x}$ unter Annahme eines ideellen Schallstrahlverlaufs bei konstanter Schallgeschwindigkeit $c_0$, wie er in Fig. 4 skizziert und mit 122 bezeichnet ist, erhalten.

In Fig. 4 ist rechts im Bild ein Schätzvelozigramm für vereinfachte Verhältnisse dargestellt. In zwei Wassertiefen $h_1$ und $h_2$ treten Sprünge des Schallgeschwindigkeitsgradienten auf, und zwar aufgrund dreier angenommener Wasserschichten mit jeweils konstanter Schallgeschwindigkeit $c_0$ bzw. $c_1$ bzw. $c_2$. Die Berechnung eines z.B. unter dem Empfangswinkel $\alpha_{09}$ empfangenen tatsächlichen Schallstrahls anhand dieses angenommenen Schätzvelozigramms würde zu einem Schallstrahlverlauf führen, wie er in Fig. 4 links im Bild strichliniert eingezeichnet ist. Die Berechnung aller Schallstrahlverläufe unter jedem der Empfangswinkel $\alpha_{01}$ bis $\alpha_{09}$ führt unter Berücksichtigung der zugehörigen Echolaufzeiten zu dem Korrektur-Testprofil, das im vorliegenden Fall bereits mit dem Eichprofil 118 übereinstimmt. Die erste Annahme des Schätzvelozigramms kann dabei einigermassen genau dadurch getroffen werden, dass man von bekannten Velozigrammen des Vermessungsgebietes ausgeht oder vor Aufnahme der Vermessungsfahrt an einem beliebigen Punkt des Vermessungsgebietes ein Velozigramm in bisher bekannter und üblicher Weise erstellt. Dann kann die Zahl der erforderlichen Rechendurchläufe bis zur Gewinnung des exakten Velozigramms als Korrekturgrösse wesentlich reduziert werden. Zweckmässig ist es auch, die Schallgeschwindigkeit am Ort der Sende- und Empfangsantenne laufend zu bestimmen, so dass bei der Vorgabe und Korrektur des Schätzvelozigramms zumindest die Schallgeschwindigkeit $c_0$ der obersten Wasserschicht bekannt ist und damit als Variable herausfällt. Die Schallgeschwindigkeit lässt sich in bekannter Weise durch Messung von Tempe

ratur und Salzgehalt in der Tiefe von Sende- und Empfangsantenne und durch Anwendung bekannter Berechnungsformeln nach Kuwahara, Del Grosso, Wilson oder Medwin bestimmen.

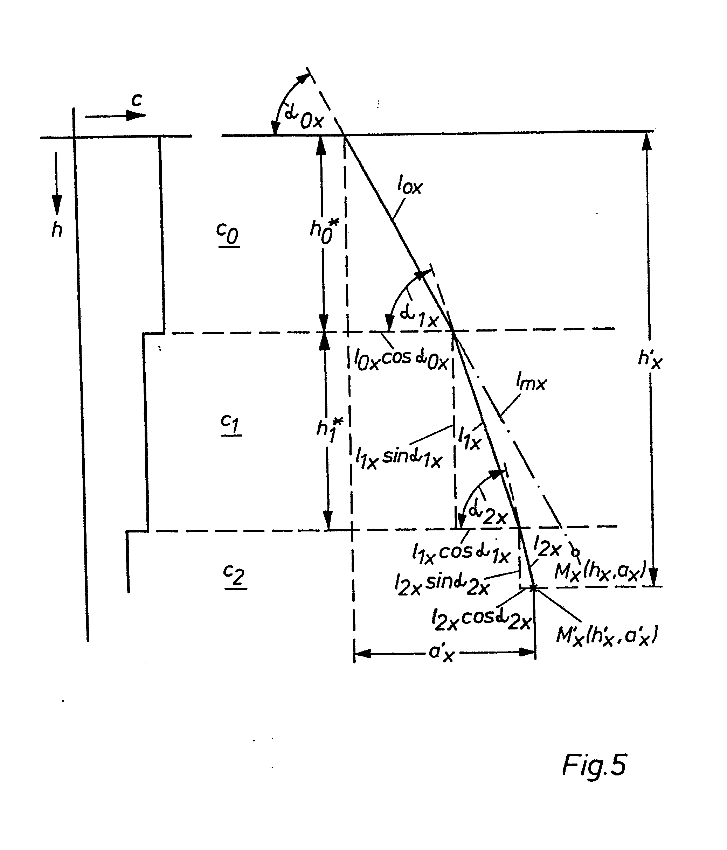

Mit dem durch ein- oder mehrfache Variation gewonnenen Schätzvelozigramm, welches den tatsächlichen Verlauf der Schallgeschwindigkeit als Funktion der Wassertiefe am momentanen Messort angibt, wird die Korrektur der zuvor bzw. nachfolgend aufgenommenen Messprofile 117 vorgenommen, wie dies in Fig. 5 anhand eines einfachen Beispiels für einen Messwert $M_x$ des Messprofils 117 beispielhaft illustriert ist. Der Messwert $M_x$ mit den Koordinaten $a_x$ und $h_x$ ergibt sich aus einer Echolaufzeit $t_x$ unter dem Empfangswinkel $\alpha_{0x}$. Bei idealem Schallstrahlverlauf führt dies mit der Schallgeschwindigkeit $c_0$ der oberen Wasserschicht zur Wegstrecke $1_{max}$. Bei drei Wasserschichten mit jeweils konstanter Schallgeschwindigkeit $c_0$ bzw. $c_1$ bzw. $c_2$ und den Schichttiefen $h_0^*$ bzw. $h_1^*$ ergibt sich der in Fig. 5 skizzierte Schallstrahlverlauf mit den Strecken $1_{0x}$, $1_{1x}$ und $1_{2x}$. Die Neigungs- bzw. Beugungswinkel $\alpha_{1x}$ und $\alpha_{2x}$ ergeben sich aus dem Snelliusschem Gesetz wie bekannt zu

$$\frac{c_0}{\cos \alpha_{0x}} = \frac{c_1}{\cos \alpha_{1x}} = \frac{c_2}{\cos \alpha_{2x}} \qquad (1).$$

Aus den in Fig. 5 angegebenen geometrischen Beziehungen ergeben sich dann die Koordinaten $a'_x$ und $h'_x$ des korrigierten Messwertes $M'_x$ des Messprofils 117 zu

$$a'_x = \frac{h_0^*}{\sin \alpha_{0x}} (\cos \alpha_{0x} - \cos \alpha_{2x})$$

$$+ \frac{h_1^*}{\sin \alpha_{1x}} (\cos \alpha_{1x} - \cos \alpha_{2x}) + 1_{mx} \cos \alpha_{2x} \qquad (2).$$

und

$$\qquad\qquad\qquad\qquad\qquad\qquad\qquad (3).$$

$$h'_x = h_0^* (1 - \frac{\sin \alpha_{2x}}{\sin \alpha_{0x}}) + h_1^* (1 - \frac{\sin \alpha_{2x}}{\sin \alpha_{1x}}) + 1_{mx} \sin \alpha_{2x}$$

$\alpha_{0x}$ ist die jeweilige Empfangsrichtung und $1_{mx}$ ist die gemessene Echolaufzeit $t_x$ des in dieser Empfangsrichtung empfangenen Echos multipliziert mit der Schallgeschwindigkeit $c_0$ der oberen Wasserschicht.

In der Natur ändert sich die Schallgeschwindigkeit üblicherweise nicht so sprungartig, wie dies in dem vorausgehenden Beispiel angenommen worden ist. Der Verlauf der Schallgeschwindigkeit als Funktion der Wassertiefe kann aber in allen Fällen mit ausreichender Genauigkeit durch eine Treppenfunktion angenähert werden, wenn man die Schrittweite $\Delta h$ genügend klein macht. Damit kann bei jedem Verlauf der Schallgeschwindigkeit als Funktion der Wassertiefe die Schallstrahlberechnung auf die obige Berechnung zurückgeführt werden. Die Abhängigkeit der Schallgeschwindigkeit vom Wasserdruck ist dabei vernachlässigt, kann aber in gleicher Weise berücksichtigt werden.

Die Genauigkeit des vermessenen Oberflächenprofils hängt nicht nur von der exakten Bestimmung der Tiefenwerte, sondern auch wesentlich von der Exaktheit der laufenden Positionsbestimmungen des Vermessungsschiffes 110 ab; denn die Echoursprungsorte werden aufgrund der momentanen Position des Vermessungsschiffes 110 bestimmt. Üblicherweise wird die Position des Vermessungsschiffes 110 nur einmal oder in grösseren zeitlichen Abständen mit Hilfe mindestens eines ortsfesten Referenzpunktes exakt bestimmt und die dazwischenliegenden momentanen Einzelpositionen durch Koppelrechnung ermittelt, die anhand von Kurs und Geschwindigkeit des Vermessungsschiffes 110 durchgeführt wird. Eine solche Koppelrechnung ist jedoch mit nicht unbeträchtlichen Fehlern behaftet, die schon allein dadurch verursacht werden, dass die Schiffsgeschwindigkeit nicht über Grund, sondern üblicherweise in Wasser gemessen wird bzw. gemessen werden kann und somit beispielsweise die Drift des Vermessungsschiffes zu nicht erkennbaren Fehlern bei der Bestimmung der Schiffsposition führt. Die mit grosser Genauigkeit vermessenen Tiefenwerte werden dann räumlich fehlerhaften Positionen zugeordnet, so dass das vermessene Oberflächenprofil in der Horizontalebene verschoben ist und trotz exakter Tiefenmessung nicht den Genauigkeitsanforderungen entspricht.

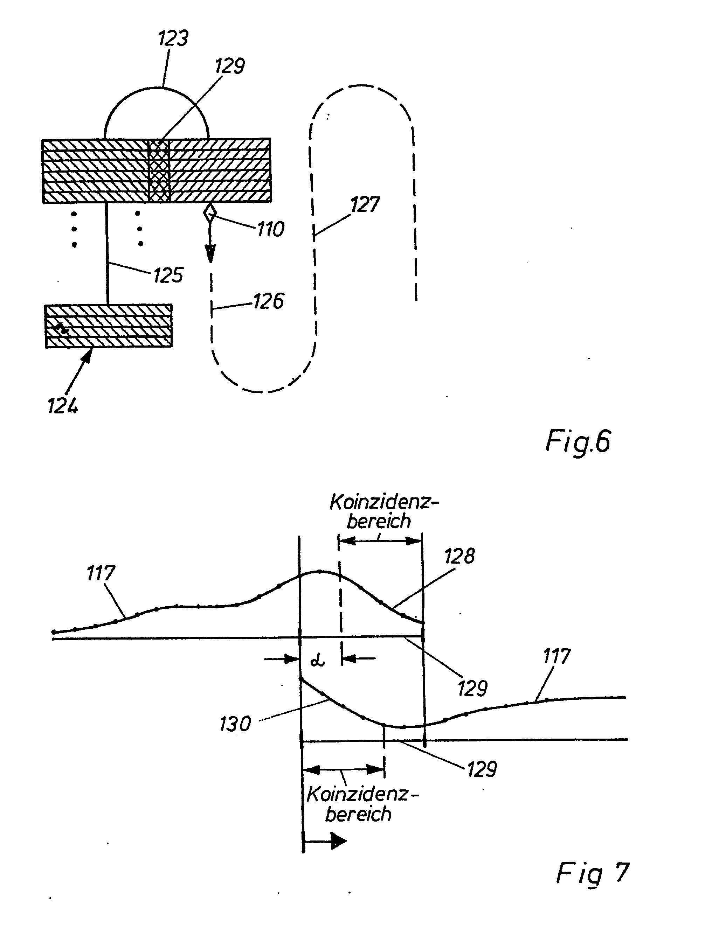

Üblicherweise wird ein Seegebiet in der Weise vermessen, dass das Vermessungsschiff 110 nach Aufnahme einer etwa geradlinigen Vermessungsspur, die das Oberflächenprofil in einer Breite zur Fahrtrichtung wiedergibt, die etwa der Querausdehnung des Fächers 114 der Empfängerstreifen 115 entspricht, an der Grenze des Seegebietes wendet und die nächste Vermessungsspur parallel zu der ersten auf Gegenkurs aufnimmt. Das Vermessungsgebiet wird dabei mäanderartig überfahren, wie dies in Fig. 6 schematisch dargestellt ist.

In Fig. 6 ist die momentane Position des Vermessungsschiffes 110 durch eine Raute gekennzeichnet. Die vom Vermessungsschiff 110 zurückgelegte Fahrstrecke ist ausgezogen dargestellt und mit 123 bezeichnet. Der von dem Vermessungsschiff 110 noch zurückzulegende Fahrweg ist strichliniert angedeutet. Auf der zurückgelegten Fahrstrecke 123 des Vermessungsschiffes 110 wird die Vermessungsspur 124 erstellt, die sich aus der Aneinanderreihung der einzelnen Messprofile 117 ergibt. Der bereits aufgenommene Teilabschnitt der Vermessungsspur 124 im ersten geradlinigen Mäanderabschnitt 125 wird nun dazu benutzt, die Positionsbestimmung des Vermessungsschiffes 110 und damit die Bestimmung der Echoursprungsorte auf der Fahrt im zweiten parallelen Mäanderabschnitt 126 zu verbessern. Hierzu werden die einander parallelen Mäanderabschnitte 125 und 126 – als alle nachfolgenden Mäanderabschnitte 127 und weitere – so gelegt, dass Randabschnitte der Messprofile 117 aus den parallelen Mäanderabschnitten 125 bis 127 der Vermessungsspur 124 sich überlappen (Fig. 6). Die Überlappungsabschnitte 129 der Messprofile 117 des bereits durchfahrenen Mäanderabschnitts 125 werden als Referenzprofil 128 (Fig. 7) benutzt, mit dem die ein Überlappungsprofil 130 bildenden Überlappungsabschnitte 129 der gerade aufgenommenen Messprofile 117 im zweiten Mäanderabschnitt 126 auf Koinzidenz geprüft werden. Die räumliche Lage des Überlappungsprofils 130 in der horizontalen Ebene wird nun in Fahrtrichtung und quer dazu so lange korrigiert, bis zumindest Teilbereiche von Referenzprofil 120 und Überlappungsprofil 130 übereinstimmen. Der so gewonnene Korrekturfaktor $\alpha$ dient zur exakten Ortsbestimmung der momentanen Messprofile 117, d.h. zur exakten Ortsbestimmung der zu den Tiefenwerten zugehörigen Echoursprungsorte, und kann gleichzeitig zur Berichtigung des Kurses des Vermessungsschiffes 110 verwendet werden.

In Fig. 7 sind schematisch zwei sich überlappende Messprofile 117 aus zwei benachbarten parallelen Mäanderabschnitten 125 und 126 im Schnitt untereinander dargestellt. Es ist angenommen, dass die mittels Koppelrechnung bestimmte Position des Vermessungsschiffes 110 infolge von z.B. Drift mit einem Fehler querab zur Fahrtrichtung behaftet ist. Im Bereich der Überlappungsabschnitte 129 werden von dem gleichen Streifen des Meeresbodens zwei Profile, das Referenzprofil 128 und das Überlappungsprofil 130, bestimmt. Diese beiden Profile weisen nur dann Koinzidenz auf, wenn das Überlappungsprofil 130 um $\alpha$ nach rechts in Fig. 7 verschoben wird. $\alpha$ bildet dann den Korrekturfaktor zur exakten Berechnung der Messprofile 117 bzw. der Schiffsposition.

Die Erfindung ist nicht auf das vorstehend beschriebene Ausführungsbeispiel beschränkt. So ist es nicht zwingend, dass Eichprofil 118 und Testprofil 119 kontinuierlich vermessen und bestimmt werden. Häufig genügt es, das zur Korrektur der Messprofile 117 ermittelte Velozigramm von Zeit zu Zeit neu zu überprüfen und hierzu einen Eichvorgang dadurch vorzunehmen, dass das Echolot kurzzeitig um 90° um die Schiffshochachse geschwenkt wird und das Testprofil 119 aufgenommen wird. Es ist lediglich darauf zu achten, dass Testprofil 119 und Eichprofil 118 aus räumlich identischen Streifen vom Meeresboden 111 abgenommen sind.

Auch ist es nicht erforderlich, dass der Senderzielstreifen 112 von dem Sender gleichzeitig beleuchtet wird. Zur Erhöhung der Sendeleistung und damit der Senderreichweite kann der Sendestrahl auch quer zur Fahrtrichtung stark gebündelt werden, so dass sein Öffnungswinkel $29_3$ auch hier nur wenige Grad beträgt. Der Sendebeam muss allerdings entsprechend schnell über den Senderzielstreifen geschwenkt werden, wobei dann bei der räumlichen Bestimmung der Echoursprungsorte die Schwenkgeschwindigkeit des Sendebeams und die Fahrgeschwindigkeit des Vermessungsschiffes zu berücksichtigen sind.

Auch ist es nicht zwingend, dass in Grund- oder Messstellung des Echolots der Senderzielstreifen 112 lotrecht unter dem Schiff und der eine Empfängerstreifen 0 des Fächers 114 lotrecht unter der Schiffslängsachse und in Schwenk- oder Eichstellung der Schiffslängsachse und in Schwenk- oder Eichstellung der Senderzielstreifen 112 lotrecht unter Längsschiff liegt. Sind Sende- und Empfangsvorrichtung in Abstand von Schiffsmitte oder vom Schiff selbst angeordnet, so werden die lotrechten Streifen parallel dazu versetzt sein. Jedoch wird in der Grund- und in der Eichstellung des Echolots der Senderzielstreifen 112 immer lotrecht unter der Sendeantennenmitte, also senkrecht zur Sendeantennennormalen, und der Empfängerstreifen 0 immer lotrecht unter der Empfangsantennenmitte, also senkrecht zur Empfangsantennennormalen, liegen. Sende- und Empfangsvorrichtung sind selbstverständlich relativ zueinander so anzuordnen, dass der Empfängerstreifen 0 des Fächers 114 in der Grund- oder Messstellung und der Senderzielstreifen 112 in der Schwenk- oder Eichstellung des Echolots die zumindest quer zur Fahrtrichtung gleiche Fläche des Meeresbodens beleuchten.

Es sei nochmals hervorgehoben, dass zur Ermittlung des Eichprofils 118 messtechnisch zunächst nur die Echolaufzeiten von den vertikal, d.h. unter 90°, zur Sendeantenne abgestrahlten Sendeimpulsen zur Verfügung stehen. Um daraus die wahren Tiefenwerte des Eichprofils 118 zu bestimmen, müssen diese Echolaufzeiten mit der Schallgeschwindigkeit multipliziert werden. Üblicherweise nimmt man hierzu die Schallgeschwindigkeit $c_0$ unmittelbar unter Kiel, also am Ort der Sende- und Empfangsvorrichtung, da diese ohne nennenswerten Aufwand gemessen werden kann. Der hierbei gemachte Fehler kann unter Umständen mehrere Prozent betragen, so dass bereits das Eichprofil 118 eine relativ grosse Ungenauigkeit enthält.

Um diesen Anfangsfehler zu reduzieren, werden bei diesem Verfahren zur Bestimmung der Tiefenwerte des Eichprofils 118 die Echolaufzeiten mit einer mittleren Schallgeschwindigkeit $c_m$ multipliziert. Diese Schallgeschwindigkeit $c_m$ wird so ermittelt, dass der bei der Berechnung des Eichprofils gemachte Fehler kleiner als 0,5‰ ist. Hierzu wird in der um 90° um die Schiffshochachse geschwenkten Schwenk oder Eichstellung des Sendebeams 113 und des Fächers 114 der Empfangsbeams 116 die Laufzeit $t_{45}$ der Echos aus dem unter 45° geneigten Empfangsbeam und die Laufzeit $t_{90}$ der Echos aus dem vertikalen Empfangsbeam gemessen. Der Quotient aus der Echolaufzeit $t_{45}$ und der Echolaufzeit $t_{90}$ wird durch $\sqrt{2}$ dividiert und mit der Schallgeschwindigkeit $c_0$ unter Kiel und mit einem Korrekturwert a mutlipliziert gemäss Gl.:

$$c_m = \frac{c_0}{\sqrt{2}} \cdot a \cdot \frac{t_{45}}{t_{90}}.$$

Der Korrekturwert a ist empirisch bestimmt und berechnet sich zu:

$$a = \sin 2 \arccos \frac{1}{2} \frac{t_{45}}{t_{90}}.$$

Unter Laufzeit der Echos bzw. Echolaufzeit wird hier die halbierte Zeitdauer vom Zeitpunkt des Abstrahlens eines Sendeimpulses bis zum Zeitpunkt des Echoempfangs verstanden.

**Patentansprüche**

1. Verfahren zur akustischen Vermessung des Oberflächenprofils eines Gewässergrundes (111), insbesondere des Meeresbodens, unter Verwendung eines auf einem Schiff (110) installierten Echolots mit einer Sende- und Empfangsvorrichtung, bei welchem mittels der Sendevorrichtung eine Vielzahl von sich im wesentlichen lotrecht unter Sendeantennenmitte quer zur Fahrtrichtung des Schiffes erstreckender, in Fahrtrichtung aufeinanderfolgender schmaler Senderzielstreifen (112) auf dem Gewässergrund jeweils nacheinander mit Schallimpulsen beschallt wird, bei welchem mittels der Empfangsvorrichtung zu jedem Senderzielstreifen jeweils ein Fächer (114) von sich in Fahrtrichtung erstreckenden, quer zur Fahrtrichtung aneinandergereihten, schmalen Empfängerstreifen (115) gebildet wird, die jeweils einen den zugehörigen Senderzielstreifen überdeckenden Abschnitt aufweisen und von denen einer im wesentlichen lotrecht unter Empfangsantennenmitte liegt, bei welchem die am Gewässergrund entstehenden Echos aus den einzelnen, den jeweils beschallten Senderzielstreifen überdeckenden Abschnitten der Empfangsstreifen eines Fächers getrennt empfangen werden, und bei welchem die Laufzeiten der empfangenen Echos gemessen und daraus Tiefenwerte bestimmt werden, die ein Messprofil des Gewässergrundes in dem jeweils beschallten quer zur Fahrtrichtung sich erstreckenden Senderzielstreifen ergeben, dadurch gekennzeichnet, dass anhand der Tiefenwerte aus einer Vielzahl von in Fahrtrichtung aufeinanderfolgenden und jeweils lotrecht unter der Empfangsantennenmitte liegenden Empfängerstreifen ein im wesentlichen lotrecht unter Empfangsantennenmitte in Fahrtrichtung sich erstreckendes Eichprofil (118) gebildet wird, dass zu wählbaren Zeitpunkten der Senderzielstreifen (112) und der Fächer (114) von Empfängerstreifen (115) aus ihrer Grund- oder Messstellung kurzzeitig um einen rechten Winkel um die Schiffshochachse geschwenkt werden, dass in der Schwenkstellung in gleicher Weise wie das Messprofil ein Profil des nun in Fahrtrichtung sich erstreckenden Senderzielstreifens (112) als Testprofil (119) aufgenommen wird, dass das Testprofil (119) und ein damit räumlich gleichliegender Abschnitt des Eichprofils (118) miteinander verglichen werden und aus Abweichungen mindestens eine Korrekturgrösse abgeleitet wird und dass zur Festlegung des Oberflächenprofils die in Fahrtrichtung aneinandergereihten Messprofile (117) mittels der Korrekturgrösse korrigiert werden.

2. Verfahren nach Anspruch 1, dadurch gekennzeichnet, dass als Korrekturgrösse ein Velozigramm ermittelt wird und die Korrektur der Messprofile (117) anhand des damit berechenbaren tatsächlichen Schallstrahlverlaufs durchgeführt wird.

3. Verfahren nach Anspruch 2, dadurch gekennzeichnet, dass zur Velozigrammermittlung ein dem Testprofil (119) zugeordneter ideeller Schallstrahlverlauf mittels eines anhand der Abweichungen von Test- und Eichprofil (119, 118) geschätzten Schätzvelozigramms korrigiert wird, dass ein aus dem korrigierten Schallstrahlverlauf sich ergebendes Korrektur-Testprofil mit dem Eichprofil (118) verglichen wird, dass bei Abweichungen zwischen Korrektur-Testprofil und Eichprofil (118) das Schätzvelozigramm variiert wird und dass die Berechnung des korrigierten Schallstrahlverlaufs aufgrund des einfach oder mehrfach variierten Schätzvelozigramms so lange wiederholt wird, bis ein sich ergebendes Korrektur-Testprofil mit dem Eichprofil (118) übereinstimmt, und dass das zuletzt variierte Schätzvelozigramm die Korrekturgrösse bildet.

4. Verfahren nach einem der Ansprüche 1 bis 3, dadurch gekennzeichnet, dass zur Vermessung des Oberflächenprofils das Schiff mäanderartig über das zu erfassende Seegebiet gefahren wird, dass die einander parallelen Mäanderabschnitte (125 bis 127) der Fahrstrecke (123) so gelegt werden, dass Randabschnitte aufgenommener Messprofile (117) einander überlappen und dass aus den Überlappungsabschnitten (129) der Messprofile (117) des bereits durchfahrenen Mäanderabschnitts (125) ein Referenzprofil (128) zur Korrektur des momentanen Schiffskurses und/oder der Echoursprungsorte in den Messprofilen des nachfolgenden parallelen Mäanderabschnitts (126) gebildet wird.

5. Verfahren nach Anspruch 4, dadurch gekennzeichnet, dass die Überlappungsabschnitte (129) der jeweils im benachbarten parallelen Mäanderabschnitt (125 bis 127) nachfolgend aufgenommenen Messprofile (117) als Überlappungsprofil (130) fortlaufend mit dem Referenzprofil (128) auf Koinzidenz geprüft werden und dass eine zur Koinzidenz führende räumliche Verschiebung des Überlappungsprofils (130) als Korrekturfaktor (α) verwendet wird.

6. Verfahren nach einem der Ansprüche 1 bis 5, dadurch gekennzeichnet, dass zur Bestimmung der Tiefenwerte des Eichprofils (118) die Laufzeiten der Echos aus den lotrecht unter Empfangsantennenmitte liegenden Empfängerstreifen mit einer mittleren Schallgeschwindigkeit ($c_m$) multipliziert werden und dass zur Bestimmung der mittleren Schallgeschwindigkeit ($c_m$) in der Schwenk- oder Eichstellung die Laufzeiten der Echos aus dem unter 45° und aus dem rechtwinklig unter Empfangsantennenmitte liegenden Empfängerstreifen ins Verhältnis gesetzt werden und das um $\sqrt{2}$ reduzierte Verhältnis mit der Schallgeschwindigkeit $c_0$ am Ort der Sende- und Empfangsvorrichtung und mit einem Korrekturwert a multipliziert wird.

7. Verfahren nach Anspruch 6, dadurch gekennzeichnet, dass der Korrekturwert a bestimmt wird gemäss

$$a = \sin 2 \arc \cos \tfrac{1}{2} \frac{t_{45}}{t_{90}},$$

wobei $t_{45}$ die Laufzeit der Echos aus dem unter 45° und $t_{90}$ die Laufzeit der Echos aus dem rechtwinklig unter Empfangsantennenmitte liegenden Empfängerstreifen ist.

**Claims**

1. A process for acoustically surveying the surface profile of the bottom of a body of water (111), more particularly the sea bottom, using a depth sounder installed on a vessel (110) and having a transmitting and receiving apparatus, wherein: the transmitting device delivers a sequence of sound pulses to a plurality of narrow transmission target strips (112) extending successively on the sea bottom in the direction of travel of the vessel and transversely thereof substantially perpendicularly below the centre of the transmitting antenna; the receiving device forms for each transmission target strip a fan (114) of narrow receiver strips (115) which extend in succession in the direction of travel and transversely thereof and each of which has a section registering with the associated transmission target strip, one of the receiver strips (115) being disposed substantially perpendicularly beneath the centre of the receiving antenna; echoes from individual portions of the reception strip of a fan which register with each transmitter target strip receiving a sound pulse are received separately; and the duration times of the received echoes are measured and depth values are determined therefrom which produce a measuring profile of the bottom of the body of water in the particular transmission target strip extending transversely of the direction of travel and receiving a sound pulse, characterized in that a calibration profile (118) extending in the direction of travel substantially perpendicularly below the centre of the reception antenna is formed on the basis of the depth values from a plurality of successive receiver strips each disposed perpendicularly below the centre of the receiving antenna; the transmission target strip (112) and the fan (114) of receiver strips (115) are briefly pivoted at selectable times out of their basic or measuring position through a right angle around the vessel's vertical axis; in the pivoted position, in the same manner as the measuring profile, a profile is recorded as a test profile (119) of the transmission target strip (112) now extending in the direction of travel; the test profile (119) and a portion of the calibration profile (118) lying in the same space as the latter are compared with one another and at least one correctional value is derived from differences; and the measured profiles (117) succeeding one another in the direction of travel are corrected by means of the correctional value.

2. A process according to Claim 1, characterized in that the correctional value determined is a velocigram and the correction of the measuring profiles (117) is performed on the basis of the course of the actual acoustic beam calculable therewith.

3. A process according to Claim 2, characterized in that a notional course of the acoustic beam associated with the test profile (119) is corrected by means of an estimation velocigram estimated from the differences between the test and calibration profiles (119, 118) to determine the velocigram; a correctional test profile obtained from the corrected course of the acoustic beam is compared with the calibration profile (118); if there are differences between the correctional test profile and the calibration profile (118), the estimated velocigram is varied and the calculation of the corrected course of the acoustic beam is repeated on the basis of the singly or multiply varied estimation velocigram until a correctional test profile obtained agrees with the calibration profile (118); and the estimation velocigram last varied forms the correctional value.

4. A process according to 1 of Claims 1 to 3 characterized in that the vessel is sailed in a meander pattern over the sea area to be covered in order to survey this surface profile; and the parallel meander portions (125 to 127) of the distance travelled (123) are so laid that edge portions of recorded measuring profiles (117) overlap one another, and from the overlapping portions (129) of the measuring profiles (117) for the meander portion (125) already travelled over a reference profile (128) is formed to correct the course of the vessel at the moment and/or the places of origin of the echoes in the measuring profiles of the following parallel meander portion (126).

5. A process according to Claim 4, characterized in that the overlapping portions (129) of each of the measuring profiles (117) subsequently recorded in the adjacent, parallel meander portion (125 to 127) are continuously checked for coincidence with the reference profile (128), and a spatial displacement of the overlapping profile (130) leading to coincidence is used as the correctional factor $(\alpha)$.

6. A process according to 1 of Claims to 1 to 5, characterized in that to determine the depth values of the calibration profile (118), the duration times of the echoes from the receiver strips disposed perpendicularly below the centre of the reception antenna are multiplied by a mean sonic speed $(c_m)$, and to determine the mean sonic speed $(c_m)$ in the pivoted or calibration position the duration times of the echoes from the receiver strip at 45° and from the receiver strip disposed at right angles below the center of the reception antenna are brought into ratio, and the ratio reduced by $\sqrt{2}$ is multiplied by the sonic speed $c_0$ at the place of the transmitting and receiving device and by a correctional value a.

7. A process according to Claim 6, characterized in that the correctional value is determined in accordance with

$$a = \sin 2 \arccos \tfrac{1}{2} \frac{t_{45}}{t_{90}},$$

$t_{45}$ being the duration of the echoes from the receiver strip disposed at 45° and $t_{90}$ being the duration time of the echoes from the receiver strip disposed at right angles below the centre of the receiver antenna.

**Revendications**

1. Procédé de mesure acoustique du profil de surface d'un fond (111) d'une étendue d'eau, notamment du fond marin, moyennant l'utilisation d'un sondeur acoustique installé sur un navire (110) et comportant un dispositif d'émission et un dispositif de réception, et selon lequel, à l'aide du dispositif d'émission, on envoie respectivement successivement des impulsions ultrasonores à une multiplicité d'étroites bandes cibles pour l'émission (112), qui s'étendent, sensiblement transversalement par rapport à la direction de déplacement du navire et se succèdent dans cette direction, en étant disposées, à la verticale, au-dessous du centre de l'antenne d'émission, sur le fond de l'étendue d'eau, et selon lequel, à l'aide du dispositif de réception, on forme, pour chaque bande cible pour l'émission un éventail respectif (114) de bandes étroites de réception (115) qui s'étendent dans la direction de déplacement et se succèdent transversalement par rapport à cette direction et qui possèdent chacune une section recouvrant la bande cible associée pour la réception et dont l'une est située sensiblement à la verticale au-dessous du centre de l'antenne de réception, et selon lequel les échos apparaissant sur le fond de l'étendue d'eau sont reçus séparément à partir des différentes sections des bandes de réception d'un éventail, qui recouvrent les bandes cibles pour l'émission, balayées respectivement par les ultrasons, et selon lequel on mesure les temps de propagation des échos reçus et on détermine, à partir de là, des valeurs de profondeur qui fournissent un profil de mesure du fond de l'étendue d'eau dans la bande cible pour l'émission, qui est balayée respectivement par les ultrasons et s'étend transversalement par rapport à la direction de déplacement, caractérisé en ce que sur la base des valeurs de profondeur obtenues à partir d'une multiplicité de bandes de réception se succédant dans la direction de déplacement et situées respectivement à la verticale au-dessous du centre de l'antenne de réception, on forme un profil d'étalonnage (118) qui s'étend dans la direction de déplacement sensiblement à la verticale au-dessous du centre de l'antenne de réception, qu'à des instants pouvant être sélectionnés on fait pivoter en un bref intervalle de temps sur un angle droit autour de l'axe vertical du navire la bande cible pour l'émission (112) et l'éventail (114) de bandes de réception (115) à partir de leur position de base ou de mesure, que dans la position pivotée on enregistre, de la même manière que le profil de la mesure, un profil de la bande cible pour l'émission (112), qui s'étend dans la direction de déplacement, sous la forme d'un profil de contrôle (119), qu'on compare entre eux le profil de contrôle (119) et une section, qui coïncide dans l'espace avec ce dernier, du profil d'étalonnage (118) et qu'on dérive à partir d'écarts, au moins une grandeur de correction et que pour déterminer le profil de surface, on corrige les profils de mesure (117), qui se succèdent dans la direction de déplacement, à l'aide de la grandeur de correction.

2. Procédé selon la revendication 1, caractérisé en ce qu'on détermine, comme grandeur de correction, un diagramme de vitesses et qu'on exécute la correction des profils de mesure (117) sur la base de la forme effective du faisceau d'ultrasons, que l'on peut calculer à l'aide du diagramme de vitesses.

3. Procédé selon la revendication 2, caractérisé en ce que pour déterminer le diagramme de vitesses, on corrige une forme idéale du faisceau d'ultrasons, associé au profil de contrôle (119), à l'aide d'un diagramm de vitesses estimé à partir des écarts entre le profil de contrôle et le profil d'étalonnage (119, 118), qu'on compare un profil de contrôle de correction, obtenu à partir de la forme corrigée du faisceau d'ultrasons, au profil d'étalonnage (118), que dans le cas d'écarts entre le profil de contrôle de correction et le profil d'étalonnage (118), on modifie le diagramme de vitesses estimé et qu'on répète le calcul du profil corrigé du faisceau d'ultrasons sur la base du diagramme de vitesses estimé modifié une seule fois ou plusieurs fois, jusqu'à ce qu'un profil de contrôle de correction obtenu coïncide avec le profil d'étalonnage (118) et que le diagramme de vitesses estimé, modifié en dernier lieu, constitue la grandeur de correction.

4. Procédé selon l'une des revendications 1 à 3, caractérisé en ce que, pour mesurer le profil de surface, on fait circuler le navire selon une route sinueuse au-dessus de l'étendue de mer devant être détectée, qu'on dispose les sections de trajet sinueux (125 à 127), parallèles entre elles, de la section de déplacement (123) de manière que des sections marginales de profils de mesure enregistrés (117) se chevauchent réciproquement et qu'à partir des sections de chevauchement (129) des profils de mesure (117) de la section de route sinueuse (125) déjà parcourue, on forme un profil de référence (128) utilisé pour la correction du cap instantané du navire et/ou des lieux d'origine des échos dans les profils de mesure de la section de route sinueuse parallèle suivante (126).

5. Procédé selon la revendication 4, caractérisé en ce que l'on vérifie en permanence si les sections de chevauchement (129) des profils de mesure (117) enregistrés successivement respectivement dans les sections de route sinueuse parallèles voisines (125 à 127), coïncident, en tant que profil de chevauchement (130) avec le profil de référence (128) et qu'on utilise comme facteur de correction ($\alpha$) un décalage spatial, fournissant la coïncidence, du profil de chevauchement (130).

6. Procédé selon l'une des revendications 1 à 5, caractérisé en ce que pour déterminer les valeurs de profondeur du profil d'étalonnage (118), on multiplie les temps de propagation des échos à partir des bandes de réception, situées verticalement au-dessous du centre de l'antenne de réception, par une vitesse acoustique moyenne ($c_m$) et que pour déterminer la vitesse acoustique moyenne ($c_m$) dans la position pivotée ou dans la position d'étalonnage, on forme le rapport des temps de propagation des échos provenant de la bande de réception située à 45° et de la bande de réception disposée perpendiculairement au-dessous du centre de l'antenne de réception et qu'on multiplie le rapport, divisé par $\sqrt{2}$, par la vitesse du son $c_0$ au niveau du lieu du dispositif d'émission et de réception et par une valeur de correction a.

7. Procédé selon la revendication 6, caractérisé en ce qu'on détermine la valeur de correction a conformément à

$$a = \sin 2 \text{ arc cos } \frac{1}{2} \frac{t_{45}}{t_{90}},$$

où $t_{45}$ désigne le temps de propagation des échos à partir de la bande de réception inclinée à 45° et $t_{90}$ représente le temps de propagation des échos à partir de la bande de réception disposée perpendiculairement au-dessous du centre de l'antenne de réception.

0 140 258

*Fig.1*

*Fig.2*

Fig.3

o = Testprofil
∗ = Eichprofil

$\alpha_{00}$

$\alpha_{09}$

$h$

122

$h_1$

121

119

$h_2$

118

120

$c_2$   $c_1$   $c_0$

$c$

Fig.4

Fig.5

Fig.6

Fig 7